# EUROPÄISCHE PATENTSCHRIFT

(11) **EP 0 396 038 B1**
(45) Veröffentlichungstag und Bekanntmachung des Hinweises auf die Patenterteilung: **09.03.1994**
(21) Anmeldenummer: 90108046.5
(22) Anmeldetag: 27.04.1990
(51) Int. Cl.: C04B 2/08, B01F 5/20

(54) **Kalkdosiervorrichtung sowie Verfahren zu deren Betrieb**
Lime dosing device and process for its operation
Dispositif de dosage de la chaux et procédé pour son fonctionnement

(30) Priorität: 02.05.1989 DE 3914471; 25.04.1990 DE 4013185
(43) Veröffentlichungstag der Anmeldung: 07.11.1990
(73) Patentinhaber: Michael Glatt Maschinenbau GmbH, D-93326 Abensberg (DE)
(72) Erfinder: Zeilnhofer, Johann, Dipl.-Ing. (FH), D-8302 Mainburg 2 (DE)
(74) Vertreter: Müller-Boré & Partner Patentanwälte

(56) Entgegenhaltungen:
- DE-A- 2 650 631
- DE-B- 1 195 720
- DE-U- 8 905 520
- GB-A- 192 278
- GB-A- 2 067 908
- CHEMIE. INGENIEUR. TECHNIK. vol. 59, no. 3, 1987, WEINHEIM DE Seiten 228 - 235; H.BECKER: "Hochreaktive Kalkhydrat-Suspensionen für Industrielle Chemische Prozesse-Herstellung und Eigenschaften"

## Beschreibung

Die vorliegende Erfindung betrifft eine Kalkdosiervorrichtung mit den Merkmalen des Anspruchs 1 sowie ein Verfahren zum Betrieb des selben mit den Merkmalen des Anspruchs 8.

Es ist bereits ein Gerät zum Benetzen von Pulver- oder Granulatmaterial bekannt (GB-A-20 67 908), bei dem trockenes Material in ein zylindrisches, senkrecht stehendes Rohr geführt wird. Das Rohr weist eine Reihe von schraubenförmig angeordneten Düsen auf, die von außerhalb des Rohres mit einer Benetzungsflüssigkeit beschickt werden und radial nach innen und nach unten gerichtete Flüssigkeitsstrahlen erzeugen. Die Flüssigkeitsstrahlen treffen auf das durch das Rohr fallende, trockene Material mit hoher Energie auf. Dadurch, daß die Strahlen nach unten geneigt sind, wird ein abwärts gerichteter Luftstrom in dem Rohr erzeugt, so daß sich aus dem trockenen Material entwickelnder Staub nach unten abgezogen wird. Die bekannte Vorrichtung eignet sich vorzugsweise zum Benetzen von schwer zu benetzenden Materialien wie Polymer in Pulver- oder Granulatform. Solche Mischungen aus Wasser und chemisch ausreagiertem Polymer-Granulat werden z.B. als Schmiermittel bei Ölbohrungen eingesetzt. Dabei ist anzumerken, daß zwischen ausreagierten Polymeren und Wasser keine chemische Reaktion mehr stattfindet sondern höchstens ein Aufquellen der Polymere stattfindet.

Die Erfindung betrifft eine Kalkdosiervorrichtung mit einem Förderorgan einem Löschbehälter, einem Kalkeintrittsstutzen zwischen Förderorgan und Löschbehälter sowie einer Wasserzufuhr zum Löschbehälter und Brüdenabsaugung vom Löschbehälter sowie ein Verfahren zum Betrieb der Dosiervorrichtung.

Bei vielen Prozessen, wie der Rauchgasentschwefelung oder der Abwassertechnik werden Fällungsreaktionen mit Kalkmilch durchgeführt. Diese Kalkmilch wird in bestimmten Mengen und Stärken benötigt und mittels Kalkdosieranlagen aus Branntkalk, üblicherweise Weißfeinkalk, und Wasser hergestellt.

Bei den herkömmlichen Kalklöschanlagen wird dabei Wasser und Weißfeinkalk in einen Löschbehälter, im Verhältnis 1 : 4 bis 1 : 5, eingebracht. Dabei wird infolge der chemischen Reaktion zwischen Branntkalk und Wasser Wärme frei und es entstehen die sogenannten Brüden, also Dampf, der Kalkmilchtröpfchen und feuchten Kalkstaub bzw. Aerosole davon mit sich führt.

Diese Brüden, die am oberen Ende des Löschbehälters abgesaugt werden, benetzen die Behälterwandung des Löschbehalters über dem Füllungsniveau auch in den Kalkeintrittsstutzen hinein und durch diesen nach oben Dadurch kommt es vor allem am Kalkeintrittsstutzen im Löschbehälter immer wieder zu Verstopfungen, zumal Weißfeinkalk sehr hygroskopisch ist und sich sofort an feuchten Wandungen anlagert. Dies führt häufig dazu, daß der zuzudosierende Weißfeinkalk bis zur Schnecke hoch befeuchtet wird und auch in der Schnecke verbackt und so die weitere Zudosierung unterbrochen wird.

Bei Kalklöschanlagen ist dies kein Problem, da man jederzeit unterbrechen und das Zufuhrorgan reinigen kann. So zeigt die GB-PS 192 278 eine Ausführungsform, bei der der Rohstoff unterhalb der Sprühdüse eingebracht wird, so daß die Sprühdüse lediglich den Austrag von Kalkmilchtröpfchen oder Aerosolen mit den Brüden verhindert.

Das Verstopfungsproblem wird jedoch dann wichtig, wenn es sich um Dosieranlagen handelt, die automatisch, verhältnismäßig exakt einzustellende Mengen über längere Zeiträume zuführen müssen.

Bei den bisher bekannten Anlagen wird deshalb meist ein Absperrorgan in Form eines Flachschiebers, einer Absperrklappe oder eines Absperrtellers in den Bereich zwischen Kalkzuteilorgan, also Schnecke, und Löschbehälter, also in den Kalkeintrittsstutzen eingebaut, um das Kalkzuteilorgan und das obere Ende des Kalkeintrittsstutzens vor den Brüden wenigstens während der Zeit zu schützen, in der kein Kalkeintrag erfolgt. Hierbei kommt es jedoch im Bereich unterhalb des Absperrorgans und am Absperrorgan selbst nach wie vor immer zu Ablagerungen und Verstopfungen und außerdem müssen die Absperrorgane bei Kalkeintrag geöffnet sein, so daß während dieser Zeit Brüden in die Zuteilorgane, also bis zur Schnecke gelangen können.

Gemäß einer weiteren Entwicklung wurde versucht, dieses Problem wenigstens zu verringern, indem über dem Ende des Förderorgans für den Kalk, also über dem Schneckenende, ein Deckel vorgesehen ist durch den im Maße des Brüdenabzuges Luft eingesaugt wird. Dies ist eine Verbesserung, die jedoch das Problem noch nicht beheben kann.

Aufgabe der Erfindung ist es, Anlagerungen und Verstopfungen im Kalkeintrittsstutzen dauerhaft zu vermeiden und so eine ungestörte Kalkdosierung zu ermöglichen.

Diese Aufgabe wird durch eine Kalkdosier vorrichtung mit den Merkmalen des Anspruchs 1 sowie durch ein Verfahren zum Betrieb derselben mit den Merkmalen des Anspruchs 8 gelöst.

Durch diese Neugestaltung des KalkeintragbereicheS werden diese Verstopfungen völlig vermieden.

Bei der Neukonstruktion entfällt also das Absperrorgan zwischen Löschbehälter und Förderschnecke und durch die Zufuhr des benötigten Wassers in Form eines nach unten zusammenführenden Sprühkegels wird ein Wasserstrahlpumpeneffekt und somit ein Unterdruck erzeugt, wodurch der Weißfeinkalk in den Löschbehälter eingesogen wird, und zwar weitgehend unabhängig von der durch den Brüdenabzug bedingten Saugwirkung. Schließlich verhindert die eingesaugte Frischluft zusätzlich, daß Brüden nach oben steigen und Verstopfungen im Kalkeintrittsstutzen oder sogar darüber im Förderorgan, wie der Zuteilschnecke, erfolgen können.

Weiterhin weisen der Kalkeintrittsstutzen und das Förderorgan keine formschlüssige Verbindung auf, so daß es keine Übergangszone "trocken-naß" im Abwurfbereich des Feinkalks gibt und daher keine Möglichkeit einer Ansatzbildung infolge der hygroskopischen Eigenschaften des Weißfeinkalks besteht.

Demgemäß ist der Spalt 10 dadurch ausgebildet, daß der auf dem Löschbehälter aufsitzende Kalkeintrittsstutzen 6 als Rohrstutzen ausgebildet ist und das vom Förderorgan nach unten führende, ebenfalls als Rohrstutzen ausgebildete Kalkeintrittsorgan 8 in einem Abstand umgibt.

Der Kalkstrom wird somit in einem Luftstrom geführt. So können keine Kalkpartikel an die Wandung des Kalkabführstutzens im Bereich oberhalb des Sprührings gelangen. Im Bereich unterhalb des Sprührings wird die Wandung des Kalkeintragsstutzens durch den Wasserstrahl ständig abgewaschen. Außerdem können durch das ständige Ansaugen von Frischluft über den Kalkeintrittsstutzen keine Brüden über das Niveau des Sprühkegels in die vorgeschalteten Aggregate eindringen und zu Verstopfungen in Kalkeintrittsstutzen oder gar der Dosierschnecke führen.

Gemäß einer bevorzugten Ausführungsform der Erfindung läßt man die kegelförmig aus dem Düsenring 9 austretenden Wasserstrahlen nicht ungebremst aufeinanderprallen, weil vor allem bei höherem Spritzdruck trotz des durch den Frischluftspalt 10 zugeführten Luftstromes feine Tröpfchen nach oben abgelenkt werden können.

Man läßt daher die Wasserstrahlen des Düsenringes 9 auf die nach innen abgeschrägte äußere Kante 14 eines in den Kalkeintrittsstutzen 6 eingelegten oder im Abstand von der Oberkante des Kalkeintrittseintrittsstuzens 6 aufgelegten Ringes 13 spritzen, wodurch ihre Kraft soweit gebremst wird, daß sie beim darauffolgenden Aufeinandertreffen nicht mehr genügend Wucht haben, um Tröpfchen merklich nach oben abzulenken.

Vorzugsweise ist der Einsatzring 13 dicht in den Kalkeintrittsstutzen 6 eingepaßt und damit nicht zwischen der Aussenseite des eingesetzten Ringes 13 und der Innenseite des Kalkeintrittsstutzens 6 Verschmutzungen auftreten, die bei längerem Betrieb evtl. zu Korrosion führen könnten, ist der Einsatzring 13 vorzugsweise gegen den Kalkeintrittsstutzen 6 durch Dichtungen 15 abgedichtet angebracht.

Gemäß einer weiteren bevorzugten Ausführungsform ist der Ring 13 an seinem oberen Teil flanschartig radial nach außen verbreitert und sitzt derart auf einer am Kalkeintrittsstutzen 6 oder am Düsenring 9 sitzenden Halterung, daß zwischen der Unterseite dieser flanschartigen Verbreiterung des Ringoberteils und der Oberkante des Kalkeintrittsstutzens 6 ein umlaufender Schlitz 17 oder eine umlaufende Reihe von Schlitzlöchern 17 verbleibt, durch welche das zugeführte Wasser auf die abgeschrägte äußere Kante 14 des Ringes 13 auftrifft.

Da bei verschiedener Leistung der Kalkdosiervorrichtung normalerweise durch schnelleres Laufen des Förderorgans 1 der Durchsatz beträchtlich variiert werden kann und lediglich die Wasserzufuhr erhöht oder erniedrigt werden muß, was bei Erhöhung notwendigerweise einen beträchtlich höheren Einspritzdruck erfordert, ist der Düsenring 9 vorzugsweise als Ring mit rechteckigem Querschnitt ausgebildet und weist einen umlaufenden Schlitz (17) oder eine umlaufende Reihe von Schlitzlöchern (17) auf, wobei die Schlitzhöhe am Düsenring 9 durch Hinauf- und Hinunterschieben des Ringes 13 derart abgedeckt oder freigegeben werden kann, daß die Schlitzhöhe mit der zuzuführenden Wassermenge in Beziehung steht, so daß bei Veränderung der erforderlichen zuzuführenden Wassermenge keine großen Druckunterschiede mehr angewandt werden müssen.

Bei der Ausführungsform ohne Einsatzring ragt das obere Ende des Kalkeintrittsstutzens 6 vorzugsweise etwas über das untere Ende des Kalkeintrittsorgans 8 nach oben was natürlich grundsätzlich auch bei den Ausführungsformen mit Einsatzring der Fall sein kann indem das Kalkeintrittsorgan 8 einen geringeren Durchmesser hat als den Innendurchmesser des Einsatzringes und somit nach unten in den Kalkeintrittsstutzen 6 bzw. den darin ein- oder aufgesetzten Ring 13 ragt.

Vorzugsweise sind die Öffnungen des Düsenringes 9 derart angeordnet, daß in Abhängigkeit vom Wasserdruck der Sprühkegel variabel einstellbar ist. Gemäß einer bevorzugten Ausführungsform ist zur Einstellung des Wasserdruckes in der Wasserzuführung zur Ringdüse ein Druckeinstellventil 11 vorgesehen und vorzugsweise wird Wasser mit einem Druck von 2 bis 3 bar dem Düsenring zugeführt. Die untere Außenkante 14 des Ringes 13 ist vorzugsweise von außen nach innen eingekehlt und die Höhenverstellung des Ringes 13 erfolgt entweder über Schrauben 16 oder umgekehrt wird der Düsenring 9 über die Schrauben 16 nach oben oder unten verstellt, wobei natürlich dann der Düsenring 9 gegen die Wand des Kalkeintrittsstutzens 6 abgedichtet sein soll.

Die Höhenverstellung des aufgesetzten Ringes 13 erfolgt vorzugsweise, indem etwa an der Stelle der Dichtung 15 Abstandsdichtungen oder dichtende Abstandsringe eingelegt oder entnommen werden. Bei dieser Ausführungsform ragt der Düsenring 9 vorzugsweise über das obere Ende des Kalkeintrittsstutzens 6 empor und der Ring 13 sitzt auf dem Düsenring 9 oder einer außen an ihm befestigten geeigneten Halterung auf. Die Unterseite der flanschartigen Verbreiterung des Ringes 13 bildet mit der Oberkante des Kalkeintrittsstutzens 6 den Schlitz 17 oder Schlitzlöcher 17, ebenso wie dies bei der Ausführungsform mit eingesetztem Ring durch die Unterkante dieses Ringes durch Hinauf- und Hinunterschieben des Ringes 13 oder des Düsenringes 9 erfolgt.

Durch diese sehr stark erleichterte Einstellung der zuzuführenden Wassermenge ist es nicht nur möglich, die Kaldosiervorrichtung an recht unterschiedliche Bedürfnisse an zuzuführendem Wasser anzupassen, sondern dadurch ist es auch möglich, andere mit Wasser zu mischende staub- oder pulverförmige Materialien als Weißkalk, z.B. Zemente oder Mischungen von Zement mit anderen Pulvern wie sie z.B. in Bohrschlämmen zum Füllen des Bohrloches verwendet werden, kontinuierlich und ohne Gefahr von Klumpenbildung mit Wasser zu mischen, so daß auf diese Weise auch eine breitere Anwendbarkeit der erfindungsgemäßen Kalkdosiervorrichtung möglich ist. Auch bei sehr feinteiligem Material besteht nicht mehr die Gefahr, daß feuchte Stäube oder Aerosole der mit Wasser zu mischenden Substanzen nach oben entweichen und die Zufuhr des Materials stören.

Die vorstehend beschriebene Konstruktion bietet weiterhin Vorteile für den gesamten Löschprozess, da durch die schnelle und intensive Vermischung von Wasser und Kalk eine feine aufgeschlossene Kalkmilch mit sehr kleinen Kalkpartikeln bzw. großer Oberfläche derselben im Löschbehälter entsteht und jegliche Klumpenbildung vermieden wird, die jetzt häufig durch die vorzeitige Befeuchtung des Feinkalks durch aufsteigende Brüden herbeigeführt wird.

Der bekannte Deckel kann zusätzlich noch zur Luftansaugung weiterverwendet werden, ist jedoch nicht mehr unbedingt erforderlich.

Die beigefügten Zeichnungen erläutern die Erfindung.

Fig. 1 zeigt eine Ausführungsform einfachster Art.

Fig. 2 zeigt eine erfindungsgemäße Ausführungsform

Fig. 3 und 4 zeigen den Einbau einer Ausführungsform des Einsatzringes in die Kalkdosiervorrichtung sowie den Querschnitt durch die Wand dieses Einsatzringes und

Fig. 5 und 6 zeigen eine weitere Ausführungsform des Einsatzringes sowie einen Schnitt durch diesen Ring.

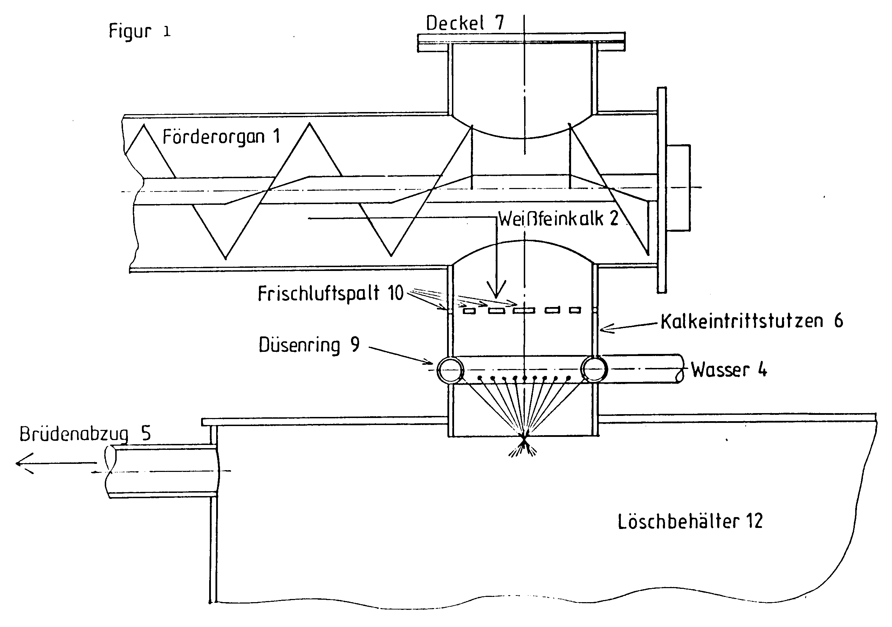

Fig. 1 zeigt eine Ausführungsform, wobei ein Düsenring (9) im Kalkeintrittsstutzen (6) zwischen Förderorgan (1) und Löschbehälter (12), ziemlich am unteren Ende dieses Kalkeintrittsstutzens vorgesehen ist. Zweckmäßig liegt der Düsenring ziemlich dicht an der Innenwand des Kalkeintrittsstutzens an. Durch geeignete Löcher im Düsenring wird Wasser kegelförmig nach schräg unten gespritzt. Über dem Düsenring befinden sich im Kalkeintrittsstutzen (6) mehrere Löcher oder Spalte (10), durch welche Luft von aussen angesaugt wird. Der Weißfeinkalk (2) fällt bedingt durch die Sogwirkung des Wassersprühkegels und die mitgesaugte Luft, welche das Aufsteigen von Brüden und Wasserdampf verhindern kann, ohne Klumpenbildung feinteilig in den Wassersprühkegel und in den Löschbehälter (12). Die Brüden werden durch den Absaugstutzen (5) abgesaugt. Durch die vom Sprühkegel durch die Löcher oder Spalte (10) eingesaugte Luft wird das Aufsteigen von Feuchtigkeit zum Förderorgan (1) wirksam verhindert und die Kalkteilchen werden über dem Sprühkegel nicht mehr so stark befeuchtet, daß sie sich an der Wand des Stutzens (6) absetzen oder gar im Förderorgan (1) verbacken könnten.

Bei geöffnetem Deckel (7) kann auch hier noch Luft angesaugt werden, um den durch die gemeinsame Wirkung des Wassersprühkegels und der Brüdenabsaugung bewirkten Luftzug durch den Sprühkegel nach unten zu verstärken.

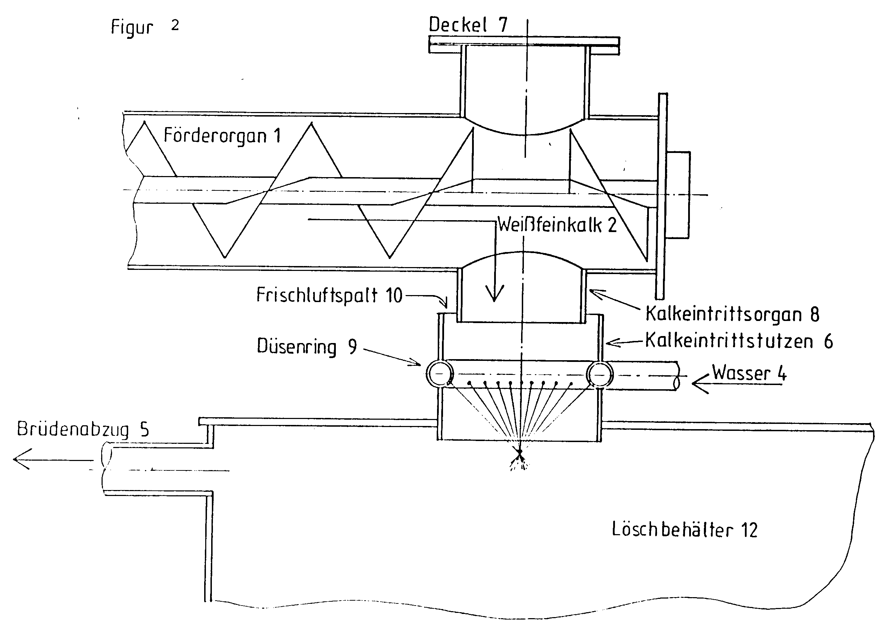

Fig. 2 zeigt eine erfindungsgemäße Ausführungsform, wobei der Kalkeintrittsstutzen (6) zum Löschbehälter das Kalkeintrittsorgan (8) aus dem Förderorgan ringförmig unter Bildung eines Spaltes (10) umgibt, wobei der obere Rand des Kalkeintrittsstutzens (6) etwas über den unteren Rand des Kalkeintrittsorgans (8) hinausragt.

Im Kalkeintrittsstutzen (6) ist ein Düsenring (9) angeordnet, dessen Wasseraustrittsöffnungen aus dem zugeführten Wasser einen Sprühkegel bilden. Dieser Kegel ist, abhängig von zugeführter Wassermenge und Wasserdruck, variabel. Selbstverständlich kann auch nur ein Teil des Wassers durch den Düsenring eingeführt werden und das restliche benötigte Wasser kann nach wie vor über einen Wasserzufuhrstutzen zugeführt werden, obwohl es sich als zweckmäßig erwiesen hat, das gesamte Wasser über den Düsenring einzuführen, um dadurch eine möglichst hohe Saugwirkung für die durch den Spalt (10) zwischen Kalkeintrittsstutzen und Kalkeintrittsorgan zugeführte Frischluft zu erzeugen.

Dieser Wassersprühkegel bewirkt zusätzlich zu dem vom Brüdenabzug bewirkten Abzug eine kräfte Sogwirkung und verhindert, daß die Brüden durch diesen Sprühkegel hindurch nach oben steigen und den Kalk benetzen.

Durch den Spalt zwischen Kalkeintrittsorgan und Kalkeintrittsstutzen ist keine formschlüssige Verbindung mehr zwischen beiden Organ gegeben und somit keine aneinandergrenzende Übergangszone "trocken-naß".

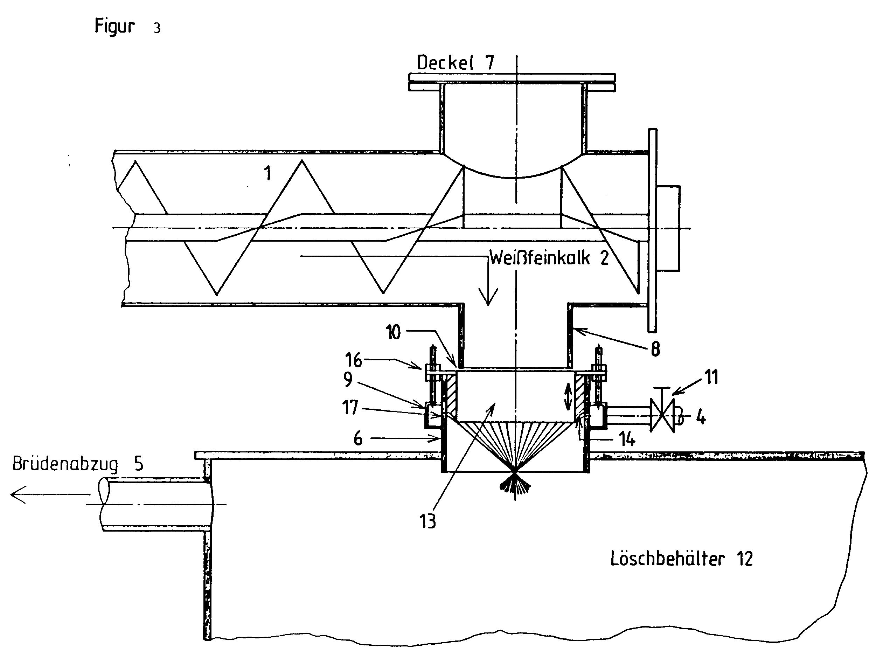

Fig. 3 zeigt, daß der Einsatzring 13 in den Kalkeintrittsstutzens 6 eingepaßt ist. Der Ring 13 kann durch die am Kalkeintrittsstutzen 6 befestigte verstellbare Schraubvorrichtung 16 nach oben und unten bewegt werden. Die Abdichtung gegen die Innenseite des Kalkeintrittsstutzens 6 erfolgt über die Dichtungen 15. Durch die Verstellung des Einsatzringes 13, dessen nach innen abgeschrägte untere Außenkante 14 zugleich den oberen Rand der Düsenlöcher bzw. des Schlitzes 17 des Düsenringes 9 begrenzt, kann die Höhe der Schlitzlöcher 17 oder dieser Schlitzdüse 17 verstellt werden, so daß mehr oder weniger Wasser bei gleichem Zuführdruck durch diesen Schlitz durchtritt. Im übrigen kann der Wasserzufuhrdruck durch das Druckeinstellventil 11 in der Zuführung für das Wasser 4 zusätzlich eingestellt werden.

Selbstverständlich kann auch der Düsenring 9, der hier außen am Kalkeintrittsstutzen 6 sitzt, nach oben oder unten bewegt werden, um bei feststehendem Ring 13 die wirksame Höhe des Schlitzes 17 zu verstellen.

Auf diese Weise ist es möglich, dem unterschiedlichen Wasserbedarf bei unterschiedlichem Durchsatz an z.B. Weißfeinkalk oder bei einem Austausch von Kalk durch andere mit Wasser zu vermengende Materialien nachzukommen, ohne daß große Veränderungen im Zufuhrdruck für das Wasser erforderlich sind, was es gestattet einen immer etwa gleichbleibenden Sprühkegel des einsprühenden Wassers aufrechtzuerhalten, aber andererseits natürlich auch den Kegel in gewünschter Weise zu variieren.

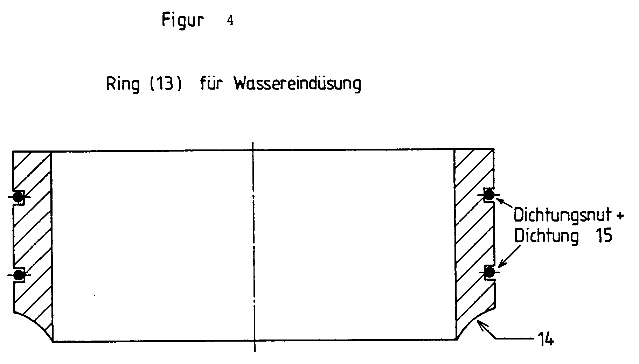

Fig. 4 zeigt einen Querschnitt durch den Einsatzring 13 und einerseits die Dichtungen 15, mit denen der Ring 13 an der Innenseite des Kalkeintrittsstutzens 6 abgedichtet ist und andererseits die abgeschrägte untere Außenkante 14 dieses Ringes 13, die vorzugsweise gekehlt ist, wobei der Winkel, mit welchem die Abschrägung auf die senkrechte Innenseite des Ringes 13 trifft, vorzugsweise ca. 30° - 40° beträgt.

Auf diese Weise lassen sich durch Höher- oder Niedrigerstellen dieses Ringes und dadurch Veränderung des Auftreffortes der Wasserstrahlen auf dieser gekehlten Ringkante Kegelwinkel und damit die Form des Kegels in gewünschter Weise verändern.

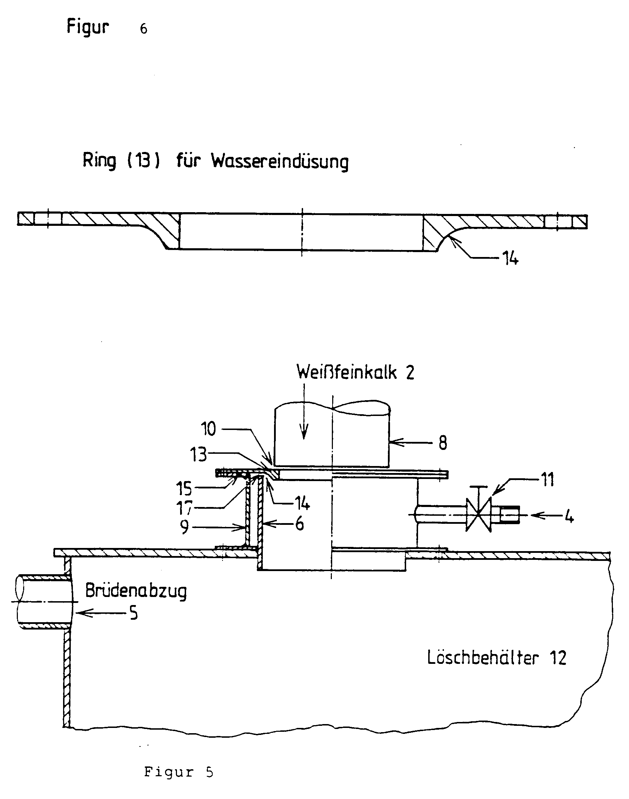

Fig. 5 zeigt eine andere Ausführungsform des Einsatzringes 13, der an seinem Oberteil flanschartig radial nach außen verbreitert ist und auf einer geeigneten Halterung aufsitzt, wobei die Unterseite dieser flanschartigen Verbreiterung mit der Oberkante des Kalkeintrittsstutzens 6 einen Schlitz oder eine Reihe von Schlitzlöchern 17 bildet. Bei dieser Ausführungsform kann der Kalkeintrittsstutzen 6 die Innenseite des Düsenringes 9 bilden oder der Düsenring 9 kann, wie auch bei der Ausführungsform gemäß Fig. 3, auf den Kalkeintrittsstutzen ringförmig dicht aufgesetzt sein, wobei natürlich am oberen inneren Ende des Düsenringes ein hinreichender Spalt vorliegen muß, daß zusammen mit dem Spalt über der Oberkante des Kalkeintrittsstutzens 6 der Schlitz 17 gebildet wird. Um diesen aufgesetzten Ring in der Höhe zu verstellen und somit den Spalt 17 zu verbreitern oder zu verengen werden dem Ring 13, zweckmäßig etwa an der Position der Dichtung 15, Abstandsdichtungen oder dichtende Abstandsringe (nicht gezeigt) unterlegt bzw. weggenommen.

Diese Ausführungsform des Ringes 13 ist bautechnisch weniger aufwendig, da an die Passung des Ringes 13 geringere Anforderungen gestellt werden und die Abdichtung der flanschartigen Verbreiterung gegen ein beliebiges geeignetes Halterungsorgan einfacher und auch die Höhenverstellung des Ringes durch das Einlegen und Herausnehmen von Dichtungsringen einfacher ist.

Fig. 6 zeigt den Querschnitt eines solchen aufgelegten Ringes, bei dem der Winkel der Kante 14 im wesentlichen ebenso ist wie beim eingelegten Ring gemäß Fig. 3 und Fig. 4, also etwa 30 bis 40° zur Senkrechten und auch diese Abschrägung vorzugsweise leicht eingekehlt ist.

Im Betrieb wird der Wasserdruck für das dem Düsenring zugeführte Wasser auf 2 bis 3 bar eingestellt, jedoch kann der Düsenring, je nach Größe und gewünschtem Durchsatz an Weißkalk, auch mit Wasser von höherem Druck betrieben werden, und zwar bis zum Normaldruck der üblichen Wasserleitungen von ca. 6 bar und darüber. In der praktischen Ausführungsform kann eine solche Dosieranlage je nach Größe mit einer Trockendurchsatzleistung für Weißfeinkalk von 0,15 bis ca. 3,5 t/h gefahren werden, wobei der Löschbehälter dann ein Volumen von 1 bis gut 6 m³ hat, wie dies auch bei den bekannten Anlagen der Fall ist.

Durch die Verwendung des Einsetzringes 13 wird der Betrieb der Dosiervorrichtung insgesamt sicherer und kann gleichzeitig leichter einem unterschiedlichen Wasserbedarf durch verschiedene Durchsatzmengen oder verschiedene mit Wasser zu versetzende Ausgangsmaterialien angepaßt werden.

In den Fig. 1, 3 und 5 ist mit 12 ein Löschbehälter gezeigt, wie dies für den diskontinuierlichen Betrieb beim Löschen von Kalk für z.B. die Klärschlammbehandlung üblich ist. Selbstverständlich kann sich statt dieses Löschbehälters oder anschließend daran auch ein Reaktor, z.B. ein genügend langes Rohr, das gegebenenfalls Rührelemente enthält, anschließen um beim kontinuierlichen Betrieb die erforderliche Verweilzeit zur vollständigen Reaktion des eingetragenen staubförmigen Gutes, z.B. Weißfeinkalk, mit dem Wasser zu liefern. Dieses nachgeschaltete Organ hat keinen Einfluß auf die Erfindung. Die erfindungsgemäße Dosiervorrichtung eignet sich daher sowohl für den diskontinuierlichen als auch den kontinuierlichen Betrieb, wobei ihre Vorzüge insbesondere beim kontinuierlichen Betrieb besonders deutlich werden.

## Patentansprüche

1. Kalkdosiervorrichtung mit einem Förderorgan, einem Löschbehälter, einem Kalkeintrittsstutzen zwischen Förderorgan und Löschbehälter sowie einer Wasserzufuhr zum Löschbehälter und Brüdenabsaugung vom Löschbehälter, wobei die Zuführung für wenigstens einen Teil des benötigten Wassers (4) als Düsenring (9) im oder am Kalkeintrittsstutzen (6) ausgebildet ist, dessen Düsenöffnungen schräg nach innen und unten gerichtet sind, wobei zwischen Förderorgan (1) und über diesem Düsenring(9) im Kalkeintrittsstutzen (6) mindestens ein Spalt oder Löcher (10) angeordnet sind, worüber Frischluft eingesaugt wird und wobei der Spalt (10) dadurch ausgebildet ist, daß der auf dem Löschbehälter aufsitzende Kalkeintrittsstutzen (6) als Rohrstutzen ausgebildet ist und das vom Förderorgan nach unten führende ebenfalls als Rohrstutzen ausgebildete Kalkeintrittsorgan (8) in einem Abstand umgibt.

2. Kalkdosiervorrichtung nach Anspruch 1, wobei sie einen Deckel in der oberen Wand über dem Ende des Förderorgans etwa über dem nach unten vom Förderorgan austretenden Kalkeintrittsstutzen (6) aufweist.

3. Kalkdosiervorrichtung nach Anspruch 1 oder 2, wobei auf der Innenseite des Kalkeintrittsstutzens (6) ein Ring (13) derart angeordnet ist, daß die Wasser strahlen aus dem Düsenring (9) auf der nach innen abgeschrägten äußeren Kante (14) des Ringes (13) auftreffen.

4. Kalkdosiervorrichtung nach einem oder mehreren der Ansprüche 1 bis 3 ,wobei der ring (13) anliegend an den Kalkeintrittsstutzen (6) und gegen diesen abgedichtet in den Kalkeintrittsstutzen eingepaßt ist.

5. Kalkdosiervorrichtung nach einem oder mehreren der Ansprüche 1 bis 3, wobei der ring (13) am oberen Ende flanschartig radial nach außen verlängert ist und auf einer Halterung derart aufsitzt` daß zwischen der Unterseite dieses Flansches und der Oberkante des Kalkeintrittsstutzens (6) ein umlaufender Schlitz (17) oder eine umlaufende Reihe von Schlitzlöchern (17) verbleiben.

6. Kalkdosiervorrichtung nach einem oder mehreren der Ansprüche 1 bis 5, wobei der Düsenring (9) als Ring mit rechteckigem Querschnitt ausgebildet und gegebenenfalls nach oben und unten beweglich angebracht ist.

7. Kalkdosiervorrichtung nach einem oder mehreren der vorhergehenden Ansprüche, wobei der Ring (13) nach oben oder unten beweglich in den Kalkeintrittsstutzen (6) eingesetzt oder mittels einer geeigneten Halterung und im Abstand von der Oberkante des Kalkeintrittsstutzens (6) auf diesen aufgesetzt ist, wobei die Unterkante (14) des Ringes (13) oder die Unterseite des radial nach außen verlängerten Flanschteils des Ringes (13) die Höhe des Schlitzes (17) oder der Schlitzlöcher (17) begrenzt.

8. Verfahren zum Betrieb der Dosiervorrichtung nach Anspruch 1 bis 7, wobei durch den Düsenring Wasser mit Überdruck kegelförmig eingespritzt und durch mindestens einen Spalt oder mehrere Löcher im Kalkeintrittsstutzen über dem Düsenring gleichzeitig Luft angesaugt und der zugeführte Weißfeinkalk in den Sprühkegel eingeführt wird.

9. Verfahren nach Anspruch 8, wobei man das Wasser auf die abgeschrägte Außenkante eines im den Kalkeintrittsstutzens (6) dicht passend oder im Abstand darin angeordneten Ringes (13) aufsprüht.

## Claims

1. Lime dosing apparatus having a conveying member, a slaking vessel, a lime inlet socket between conveying member and slaking vessel, and a water supply to the slaking vessel and vapour exhaustion from the slaking vessel, wherein the supply for at least part of the required water (4) is fashioned as a jet ring (9) in or at the lime inlet socket (6), whose jet orifices are directed obliquely inwards and downwards, wherein there is or are arranged between the conveying member (1) and above said jet ring (9) in the lime inlet socket (6) at least one gap or holes (10), via which fresh air is drawn in, and wherein the gap (10) is formed by the lime inlet socket (6) seated on the slaking vessel being fashioned as a pipe socket and surrounding at a distance the lime inlet member (8) which leads downwards from the conveying member and is likewise fashioned as a pipe socket.

2. Lime dosing apparatus according to Claim 1, which comprises a cover in the upper wall above the end of the conveying member approximately above the lime inlet socket (6) emerging downwards from the conveying member.

3. Lime dosing apparatus according to Claim 1 or 2, wherein a ring (13) is arranged on the inside of the lime inlet socket (6) in such a way that the water jets from the jet ring (9) impinge on the outer edge (14), which is bevelled inwards, of the ring (13).

4. Lime dosing apparatus according to one or more of Claims 1 to 3, wherein the ring (13) is fitted into the lime inlet socket (6) so as to bear thereon and be sealed against it.

5. Lime dosing apparatus according to one or more of Claims 1 to 3, wherein the ring (13) at the upper end is extended radially outwards in a flange-like manner and is seated on a holder in such a way that there remain(s), between the underside of said flange and the upper edge of the lime inlet socket (6), a circumferential slit (17) or a circumferential row of slotted holes (17).

6. Lime dosing apparatus according to one or more of Claims 1 to 5, wherein the jet ring (9) is fashioned as a ring having a rectangular cross-section and is optionally disposed in such a way that it can be moved upwards and downwards.

7. Lime dosing apparatus according to one or more of the preceding claims, wherein the ring (13) is inserted in the lime inlet socket (6) so as to be movable upwards or downwards, or is seated on the lime inlet socket (6) by means of a suitable holder and at a distance from the top edge of the lime inlet socket (6), the lower edge (14) of the ring (13) or the underside of the ring's (13) flange section which is extended radially outwards delimiting the height of the slit (17) or the slotted holes (17).

8. Method of operating the dosing apparatus according to Claims 1 to 7, wherein water is injected conically through the jet ring at elevated pressure and at the same time, through at least one gap or a plurality of holes in the lime inlet socket above the jet ring, air is drawn in and the white fine lime fed in is introduced into the spray cone.

9. Method according to Claim 8, wherein the water is sprayed onto the bevelled outer edge of a ring (13) arranged in the lime inlet socket (6) in a tightly fitting manner or with clearance.

## Revendications

1. Installation de dosage de chaux comportant un organe de transport, un récipient d'extinction, un ajutage d'admission de chaux entre l'organe de transport et le récipient d'extinction ainsi qu'un dispositif d'acheminement d'eau au récipient d'extinction et un conduit d'évacuation des buées du récipient d'extinction, le dispositif d'acheminement d'au moins une partie de l'eau nécessaire (4) étant conçu dans l'ajutage d'admission de chaux (6) ou sur ce dernier sous forme de couronne de buses (9) dont les ouvertures sont orientées obliquement vers l'intérieur et vers le bas, au moins une fente ou des trous (10) par lesquels est aspiré de l'air frais étant ménagés entre l'organe de transport (1) et au-dessus de la couronne de buses (9) dans l'ajutage d'admission de chaux (6) et la fente (10) étant formée par le fait que l'ajutage d'admission de chaux (6) reposant sur le récipient d'extinction est conçu sous forme de tubulure et entoure à une certaine distance l'organe d'admission de chaux (8) également conçu sous forme de tubulure et menant de l'organe de transport vers le bas.

2. Installation de dosage de chaux selon la revendication 1, cette installation présentant un couvercle dans la paroi supérieure au-dessus de l'extrémité de l'organe de transport, approximativement au-dessus de l'ajutage d'admission de chaux (6) faisant saillie hors de l'organe de transport vers le bas.

3. Installation de dosage de chaux selon la revendication 1 ou 2, un anneau (13) étant disposé sur la face interne de l'ajutage d'admission de chaux (6) de telle sorte que les jets d'eau de la couronne de buses (9) ont pour point d'impact l'arête externe (14), biseautée vers l'intérieur, de l'anneau (13).

4. Installation de dosage de chaux selon une ou plusieurs des revendications 1 à 3, l'anneau (13) étant ajusté dans l'ajutage d'admission de chaux de façon à être accolé à l'ajutage d'admission de chaux (6) et être étanchéifié contre ce dernier.

5. Installation de dosage de chaux selon l'une ou plusieurs des revendications 1 à 3, l'anneau (13) se prolongeant radialement vers l'extérieur sous forme de bride à son extrémité supérieure et reposant sur un dispositif de retenue de telle sorte qu'une fente circonférentielle (17) ou une série circonférentielle de trous fendus (17) demeure entre la face inférieure de cette bride et l'arête supérieure de l'ajutage d'admission de chaux (6).

6. Installation de dosage de chaux selon l'une ou plusieurs des revendications 1 à 5, la couronne de buses (9) étant conçue sous forme de couronne à section transversale rectangulaire et étant le cas échéant disposée de façon à être mobile vers le haut et le bas.

7. Installation de dosage de chaux selon l'une ou plusieurs des revendications précédentes, l'anneau (13) étant mis en place dans l'ajutage d'admission de chaux (6) de façon à être mobile vers le haut ou le bas ou étant placé sur ce dernier au moyen d'un dispositif approprié de retenue et à distance de l'arête supérieure de l'ajutage d'admission de chaux (6), l'arête inférieure (14) de l'anneau (13) ou la face inférieure de la partie bride prolongée radialement vers l'extérieur de l'anneau (13) limitant la hauteur de la fente (17) ou des trous fendus (17).

8. Procédé de mise en oeuvre de l'installation de dosage selon les revendications 1 à 7, de l'eau étant projetée coniquement avec surpression par la couronne de buses et de l'air étant aspiré simultanément par au moins une fente ou plusieurs trous dans l'ajutage d'admission de chaux, au-dessus de la couronne de buses, et la chaux blanche fine acheminée étant introduite dans le cône de projection.

9. Procédé selon la revendication 8, de l'eau étant pulvérisée sur l'arête externe biseautée d'un anneau (13) ajusté étroitement dans l'ajutage d'admission de chaux (6) ou disposé à distance à l'intérieur de ce dernier.
